# EUROPÄISCHE PATENTSCHRIFT

(11) **EP 0 424 757 B1**
(45) Veröffentlichungstag und Bekanntmachung des Hinweises auf die Patenterteilung: **05.04.1995**
(21) Anmeldenummer: 90119641.0
(22) Anmeldetag: 13.10.1990
(51) Int. Cl.: B44C 5/04, G09F 9/30, G02B 5/136, G02B 6/42, G02B 6/36, F21V 5/00, B44C 5/00, G09F 9/00, F21V 8/00, G02B 6/00

(54) **Vorrichtung zum Einkoppeln von Lichtstrahlen in einen transparenten Körper**
Device for coupling of light beams into a transparent body
Dispositif pour coupler des faisceaux lumineux dans un corps transparent

(30) Priorität: 21.10.1989 DE 3935126
(43) Veröffentlichungstag der Anmeldung: 02.05.1991
(73) Patentinhaber: Höbermann, Hans-Georg, D-21337 Lüneburg (DE)
(72) Erfinder: Höbermann, Hans-Georg, D-21337 Lüneburg (DE)
(74) Vertreter: Schupfner, Gerhard D.

(56) Entgegenhaltungen:
- DE-A- 2 634 860
- DE-A- 2 949 901
- DE-A- 3 720 101
- FR-A- 2 588 972
- US-A- 4 780 798

## Beschreibung

Die Erfindung bezieht sich auf eine Vorrichtung zum Einkoppeln von Lichtstrahlen in einen transparenten Körper, insbesondere eine Platte aus transparentem Werkstoff, wie Kunstglas, mit rauhen Ornamentwandflächen, aus denen das Licht sichtbar abgestrahlt wird.

Aus der Deutschen Patentschrift 26 34 860 ist eine Dekorationsplatte aus transparentem Kunststoff bekannt, in die auf nicht näher beschriebene Weise Licht eingekoppelt wird. Das Licht durchstrahlt die Platte unsichtbar. Wo sich in der Plattenoberfläche Gravuren befinden, die mit Gravurwandflächen in das Plattenmaterial eingreifen, wird das Licht sichtbar und zwar an den rauhen Gravurwandflächen.

Zum Einkoppeln des Lichtes in derartige Dekorationsplatten ist es bekannt, das Licht mittels Lampen auf glatte, insbesondere polierte Randflächen zu strahlen, durch die es ungebrochen in das Innere der Platte hineinstrahlen kann. Die Einkopplung erfolgt dabei relativ großflächig. Um den Einkopplungsbereich unsichtbar zu machen, wird er üblicherweise durch Halterungen, Abdeckleisten oder andere undurchsichtige Abdeckungen verdeckt.

Es ist Aufgabe der Erfindung, eine Vorrichtung zum Einkoppeln von Licht in einen transparenten Körper der eingangs erwähnten Art zu schaffen, die das Licht nahezu unsichtbar oder nur punktförmig sichtbar in den Körper einkoppelt.

Die gestellte Aufgabe ist erfindungsgemäß gelöst durch die Kombination folgender Merkmale:
a) es ist eine Lichtquelle vorgesehen, die einen Strahl gebündelten Lichtes abgibt,
b) innerhalb des transparenten Körpers befindet sich ein Lichtübergabeelement, in das der Strahl gebündelten Lichtes durch eine auf seiner Einkoppelseite gelegene glatte, plane und senkrecht zurstrahlrichtung gelegene Fläche im wesentlichen reflexionsfrei einkoppelbar ist,
c) das in das Element eingekoppelte Licht wird aus diesem Element unsichtbar in den Körper eingekoppelt, wobei es den Körper unsichtbar durchstrahlt, bis es an den rauhen Ornamentwandflächen sichtbar wird.

Ein gebündelter Lichtstrahl kann sein parallel gebündeltes Licht mit sehr hoher Intensität in ein relativ kleines Lichtübergabeelement innerhalb des Körpers einkoppeln. Das Lichtübergabeelement selbst koppelt dann seinerseits das Licht in den Körper aus, den es unsichtbar durchstrahlt. Erst an angerauhten Wandflächen wird es sichtbar. Die Einkopplung auf einem ganz eng begrenzten Raum kann bei Betrachtung aus größerer Entfernung nahezu unsichtbar werden. Gegebenenfalls kann der Einstrahlfleck selbst in sichtbar gemachte Ornamente oder dergleichen einbezogen sein.

Aus der Deutschen Offenlegungsschrift 29 49 901 ist es an sich bekannt, in einem Körper aus transparentem Werkstoff einen Luminiszenzkörper anzuordnen. Dieser Luminiszenzkörper sammelt das in den Körper eingekoppelte Licht und strahlt es konzentriert nach außen ab. Dadurch soll ein besonders brillianter Dekorationseffekt erzielt werden.

Nach einer weiteren Ausgestaltung der Erfindung ist vorgesehen, daß der Strahl gebündelten Lichtes der Lichtstrahl einer Laserlichtquelle ist, der auf das Lichtübergabeelement innerhalb des Körpers gerichtet ist. Eine solche Laserlichtquelle hat ein scharf gebündeltes Licht und kann relativ weit entfernt von dem transparenten Körper angeordnet sein.

Nach einer weiteren Ausgestaltung der Erfindung ist vorgesehen, daß der Körper eine senkrecht zur Strahlrichtung verlaufende Außenfläche aufweist, durch die der Lichtstrahl in den Körper reflexionsfrei eintreten kann. Reflexionen und Brechungen beim Eintreten des Lichtstrahles in den Körper sind dadurch vermieden.

Nach einer weiteren Ausgestaltung der Erfindung ist vorgesehen, daß der Strahl gebündelten Lichtes kontaktlos zum Lichtübergabeelement im Körper geführt wird. Dabei ist allerdings wichtig, daß beim Einstrahlen in den Körper der Körper und das Lichtübergabeelement auf den Auftreffflächen dieser Teile keine Reflexionen und Streuungen auftreten.

Nach einer anderen Ausgestaltung der Erfindung ist vorgesehen, daß der Strahl gebündelten Lichtes mittels einer Lichtleitfaser an das Lichtübergabeelement herangeführt wird. Eine Lichtleitfaser kann das gebündelte Licht unsichtbar an den tranparenten Körper heranbringen und in das Lichtilbergabeelement einkoppeln.

Nach einer weiteren Ausgestaltung der Erfindung ist vorgesehen, daß das Lichtübergabeelement ein Kristall mit geschliffener Oberfläche ist, wobei in weiterer Ausgestaltung der Erfindung das Lichtübergabeelement mit einem Facettenschliff versehen ist. Über die Facettenflächen wird das Licht in bevorzugten Richtungen in den Körper eingekoppelt. Damit lassen sich besondere Lichteffekte erzielen.

Nach einer weiteren Ausgestaltung der Erfindung ist vorgesehen, daß der geschliffene Kristall aus mineralischem Glas, Kunstglas, Quarzglas oder Diamant besteht. Die Auswahl wird nach Wunsch des Kunden und entsprechend der Kostengestaltung erfolgen.

Nach einer weiteren Ausgestaltung der Erfindung ist vorgesehen, daß das Lichtleitelement in eine nachträglich versiegelte Bohrung eingesetzt ist. Diese Art des Einbringens in den transparenten Körper ist einfach zu handhaben. Nach dem Versiegeln ist insbesondere bei einem Körper aus Acrylglas nicht mehr zu erkennen, wie das Lichtübergabeelement gleichsam frei schwebend in den Körper hineingelangt ist.

Die Erfindung wird anhand der Zeichnung näher erläutert. Es zeigen:
Fig.1a und 1b eine Vorrichtung zum Einkoppeln von gebündeltem Licht in einen transparenten Körper, bei der eine Laserlichtquelle einen Laserlichtstrahl berührungslos in ein Lichtübergabeelement innerhalb eines transparenten Körpers einkoppelt.
Fig.2 ein Lichtübergabeelement innerhalb des transparenten Körpers in Form eines Kristalles mit Facettenschliff.
Fig.3a und 3b eine Abwandlung der Vorrichtung nach Fig.1 und 2 mit einer Lichtleitfaser, die das Licht unmittelbar in das Lichtübergabeelement einkoppelt.
Fig.4 ein in eine Bohrung eingesetztes Lichtübergabeelement vor seiner Versiegelung.

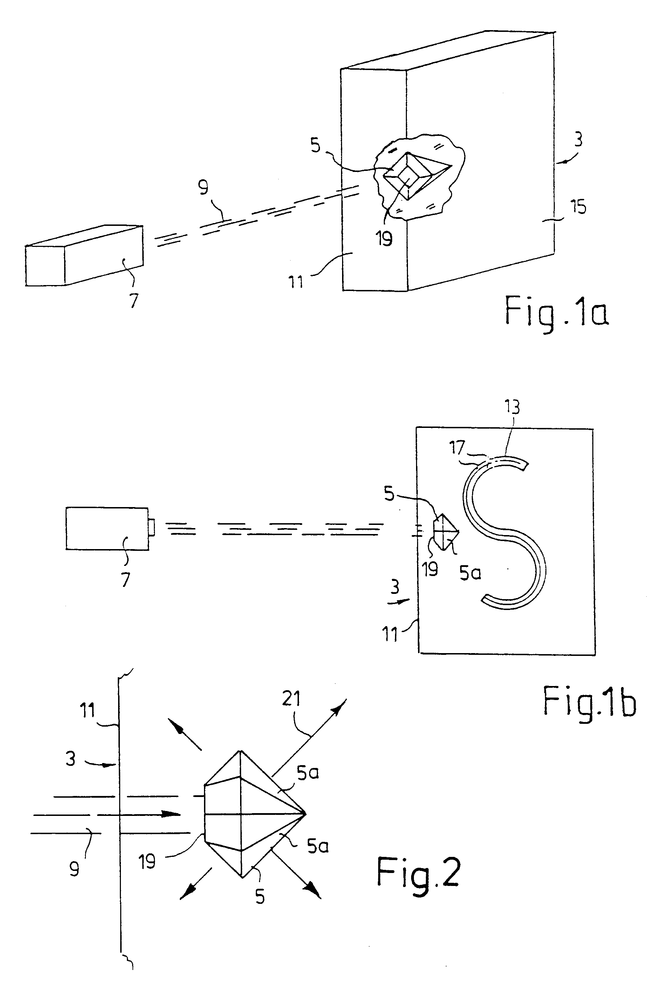

Die Figuren 1a und 1b zeigen einen transparenten Körper 3, beispielsweise aus Acrylglas, in schaubildlicher Darstellung und in Draufsicht. Der transparente Körper 3 ist bei der Darstellung nach den Figuren 1a und 1b eine Platte; die Randgestaltung kann von der nach den Fig. 1a und 1b auch völlig abweichen. Innerhalb des transparenten Körpers 3 befindet sich ein Lichtübergabeelement 5. Dieses Lichtübergabeelement 5 kann an einer beliebigen geeigneten Stelle innerhalb des Körpers 3 angeordnet sein. Seine in Fig. 1a und 1b gewählte Platzierung kann als zufällig angesehen werden.

Es ist eine Laserlichtquelle 7 vorgesehen, die einen Strahl parallel gebündelten Lichtes 9 durch eine senkrecht zur Lichteinstrahlrichtung verlaufende Wandfläche 11 des Körpers 3 auf das Lichtübergabeelement 5 innerhalb des transparenten Körpers 3 abstrahlt. Das Licht des Strahles 9 wird über eine senkrecht zur Lichtstrahlrichtung verlaufende glatte, plane oder plangeschliffene Fläche 19 in das Lichtübergabeelement 5 eingekoppelt. Durch das senkrechte Auftreffen des Lichtstrahles 9 auf die planen oder plan geschliffenen Flächen 11 und 19 wird sichergestellt, daß das Licht an der Oberfläche 11 des Körpers nicht reflektiert oder gebrochen wird.

Das in das Lichtübergabeelement 5 eingekoppelte Licht wird mittels Facettenflächen 5a von dem Lichtübergabeelement 5 unsichtbar in den Körper 3 eingekoppelt.

An dem Körper sind durch Gravieren , Schleifen oder andere Bearbeitungen Ornamente 13 angebracht. Ein solches Ornament 13 ist beispielsweise die Gravur in Form eines S in den Figuren 1a und 1b, die in die Oberfläche 15 eingearbeitet ist. Die beim Einfräsen entstandenen, in die Platte eingreifenden Ornamentwandflächen 17 sind rauh gehalten. Das unsichtbar den Körper 3 durchflutende Licht wird an den Ornamentwandflächen gebrochen und sichtbar.

Durch die Ausbildung und Anordnung des Lichtübergabeelementes 5 können die Lichteffekte, die über die Körperoberfläche 15 hinweg sichtbar werden, nach Wunsch gesteuert werden. Fig. 2 zeigt ein Lichtübergabeelement 5 in Form eines aus mineralischem Glas ( Brechungsindex 1,5 bis 1,9 ), Kunstglas, Quarzglas oder Diamant ( Brechungsindex 2,419 )bestehenden Kristalles 5 mit geschliffenen Facettenflächen 5a , der an der Einkoppelseite mit der glatten, planen oder plangeschliffenen, senkrecht zur Lichtstrahlrichtung verlaufenden Fläche 19 versehen ist. Der mehrflächig geschliffene Kristall 5 ermöglicht es, das eingekoppelte Licht in Vorzugsrichtungen, die mit den Pfeilen 21 angegeben sind, in den Körper 3 unsichtbar einzukoppeln. Die Anzahl der Facettenflächen 5a richtet sich nach den Anforderungen.

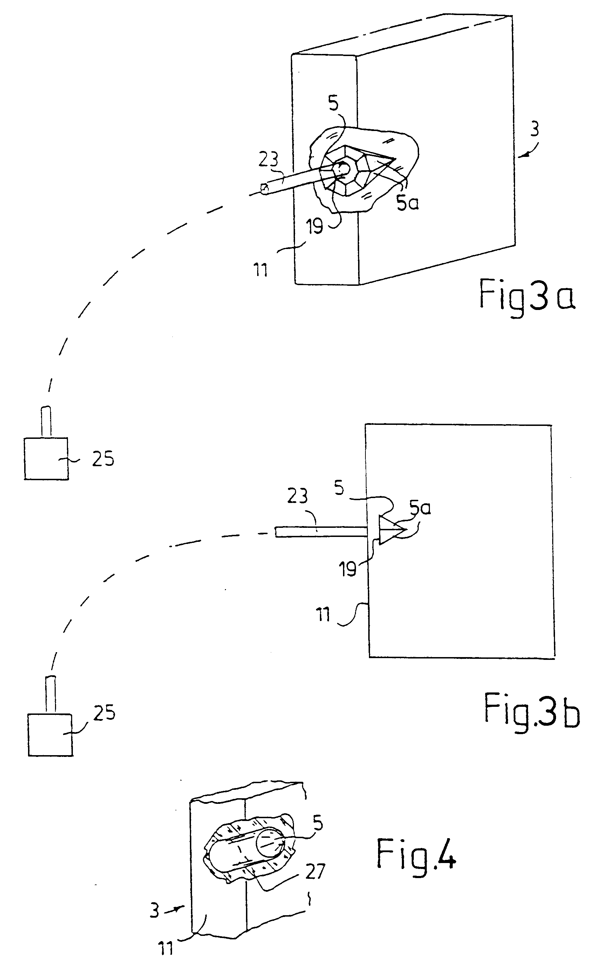

Die Figuren 3a und 3b zeigen den transparenten Körper 3 nach Fig. 1a und 1b wieder in schaubildlicher Darstellung und in Draufsicht. Bei der Ausführungssform nach Fig. 3a und 3b erfolgt eine Lichteinkopplung mit Hilfe einer Lichtleitfaser 23. Diese Lichtleitfaser 23 ist verbunden mit einer Lichtquelle 25, die gebündeltes Licht in die Faser 23 einkoppelt. Die Lichtleitfaser 23 ist entweder senkrecht flächig auf die plane, glatt polierte Oberfläche 11 des transparenten Körpers 3 vor dem Lichtübergabeelement 5 aufgesetzt oder in den transparenten Körper hineingeführt bis an das Lichtübergabeelement 5 heran.

Aus der Darstellung nach Fig.4 ist eine Möglichkeit zu erkennen, wie das Lichtilbergabeelement 5 in dem Körper 3 angeordnet werden kann. In den Körper ist dazu eine Bohrung 27 eingebracht, in die das Lichtübergabeelement 5 eingeschoben wird. Im Anschluß daran wird die Bohrung 27 wieder verfüllt und versiegelt. Die Bohrung verschwindet dadurch vollständig und im transparenten Körper ist nur noch quasi frei schwebend das Lichtübergabeelement 5 zu erkennen.

## Patentansprüche

1. Vorrichtung zum Einkoppeln von Licht in einen transparenten Körper (3), insbesondere eine Platte aus transparentem Werkstoff, wie Kunstglas, mit rauhen Ornamentwandflächen (17), aus denen das Licht sichtbar abgestrahlt wird,
mit folgenden Merkmalen:
a) es ist eine Lichtquelle (7) vorgesehen, die einen Strahl (9) gebündelten Lichtes abgibt,
b) innerhalb des transparenten Körpers (3) befindet sich ein Lichtübergabeelement (5), in das der Strahl (9) gebündelten Lichtes durch eine auf seiner Einkoppelseite gelegene glatte, plane und senkrecht zur Strahlrichtung gelegene Fläche (19) im wesentlichen reflexionsfrei einkoppelbar ist,
c) das in das Element (5) eingekoppelte Licht wird aus diesem Element 5 unsichtbar in den Körper (3) eingekoppelt, wobei es den Körper (3) unsichtbar durchstrahlt, bis es an den rauhen Ornamentwandflächen (17) sichtbar wird.

2. Vorrichtung nach Anspruch 1, dadurch gekennzeichnet, daß das Licht der parallel gebündelten Lichtstrahlen (9) das Licht einer Laserlichtquelle (7) ist, der auf das Lichtübergabeelement (5) innerhalb des Körpers (3) gerichtet ist.

3. Vorrichtung nach Anspruch 1, dadurch gekennzeichnet, daß der Körper (3) eine senkrecht zur Strahlrichtung verlaufende Außenfläche (11) aufweist, durch die der Lichtstrahl in den Körper reflexionsfrei eintreten kann,

4. Vorrichtung nach Anspruch 2, dadurch gekennzeichnet, daß der Strahl (9) gebündelten Lichtes kontaktlos zum Lichtübergabeelement (5) im Körper (3) geführt wird.

5. Vorrichtung nach Anspruch 1, dadurch gekennzeichnet, daß der Strahl (9) gebündelten Lichtes mittels einer Lichtleitfaser (23) an das Lichtübergabeelement (5) herangeführt wird.

6. Vorrichtung nach Anspruch 1, dadurch gekennzeichnet, daß das Lichtübergabeelement (5) ein Kristall mit geschliffener Oberfläche ist.

7. Vorrichtung nach Anspruch 6, dadurch gekennzeichnet, daß der Kristall (5) einen Facettenschliff (5a) aufweist.

8. Vorrichtung nach Anspruch 6, dadurch gekennzeichnet, daß der Kristall (5) aus mineralischem Glas, Kunstglas, Quarzglas oder Diamant besteht.

9. Vorrichtung nach einem der Ansprüche 1 bis 8, dadurch gekennzeichnet, daß das Lichtübergabeelement (5) in eine nachträglich versiegelte Bohrung 27 eingesetzt ist.

## Claims

1. A device for coupling light into a transparent body (3), particularly into a plate of a transparent material such as synthetic glass having rough patterned wall surfaces (17) from which the light is visibly radiated,
said device comprising the following features:
a) a light source (7) is provided which emits a beam (9) of collimated light,
b) the interior of the transparent body (3) is provided with a light transfer member (5) into which said beam (9) of collimated light can be coupled substantially without reflection through a smooth, planar surface (19) disposed on the light input side perpendicularly to the direction of said beam,
c) the light coupled into said member (5) is invisibly coupled from said member (5) into said body (3), the light being invisibly transmitted through said body (3) until it becomes visible on the rough patterned wall surfaces (17).

2. Device as claimed in claim 1, characterised in that the light of said parallel-focused light beams (9) is light from a laser source (7) directed towards said light transfer member (5) within said body (3).

3. Device as claimed in claim 1, characterised in that said body (3) comprises an outer surface which extends normal to the beam direction and through which the light beam may enter said body without reflection.

4. Device as claimed in claim 2, characterised in that the beam (9) of collimated light is guided in contactless fashion to the light transfer member (5) within said body (3).

5. Device as claimed in claim 1, characterised in that the beam (9) of collimated light is transmitted through a an optical fibre (23) to the light transfer member (5).

6. Device as claimed in claim 1, characterised in that the light transfer member (5) is a crystal with a ground surface.

7. Device as claimed in claim 6, characterised in that said crystal (5) is ground to be facetted (5a).

8. Device as claimed in claim 6, characterised in that the crystal (5) is composed of natural glass, synthetic glass, silica glass or diamond.

9. Device as claimed in any of the claims 1 to 8, characterised in that said light transfer member (5) is mounted in a subsequently sealed borehole (27).

## Revendications

1. Dispositif pour faire passer une lumière dans un corps transparent (3), en particulier une plaque de matière transparente telle que du verre synthétique, comportant des surfaces rugueuses de paroi ornementée (17) par lesquelles la lumière est rayonnée de manière visible,
présentant les caractéristiques suivantes :
a) une source lumineuse (7) qui est prévue émet un rayon (9) de lumière focalisée,
b) le corps transparent (3) comporte intérieurement un élément de transfert de lumière (5) dans lequel le rayon (9) de lumière focalisée peut être introduit sensiblement sans réflexion par une surface (19) unie, plane et perpendiculaire au rayon qui est située sur son côté d'admission,
c) la lumière introduite dans l'élément (5) passe de cet élément (5) de manière invisible dans le corps (3), cette lumière se propageant de manière invisible dans le corps (3) jusqu'à ce qu'elle soit visible sur les surfaces rugueuses de paroi ornementée (17).

2. Dispositif selon la revendication 1, caractérisé en ce que la lumière des rayons lumineux parallèles focalisés (9) est la lumière d'une source (7) de lumière laser qui est orientée sur l'élément (5) de transfert de lumière se trouvant dans le corps (3).

3. Dispositif selon la revendication 1, caractérisé en ce que le corps (3) comporte une surface extérieure (11) orientée perpendiculairement à la direction du rayon et par laquelle le rayon lumineux peut entrer dans le corps sans réflexion.

4. Dispositif selon la revendication 2, caractérisé en ce que le rayon (9) de lumière focalisée est dirigé sans contact sur l'élément de transfert de lumière (5) situé dans le corps (3).

5. Dispositif selon la revendication 1, caractérisé en ce que le rayon (9) de lumière focalisée est amené dans l'élément (5) de transfert de lumière au moyen d'une fibre (23) de guidage de lumière.

6. Dispositif selon la revendication 1, caractérisé en ce que l'élément de transfert de lumière (5) est un cristal à surface polie.

7. Dispositif selon la revendication 6, caractérisé en ce que le cristal (5) présente un taillage à facettes polies (5a).

8. Dispositif selon la revendication 6, caractérisé en ce que le cristal (5) est en verre minéral, verre synthétique, verre quartzeux ou diamant.

9. Dispositif selon l'une des revendications 1 à 8, caractérisé en ce que l'élément (5) de transfert de lumière est logé dans un trou 27 qui est ensuite scellé.
